(19) Europäisches Patentamt / European Patent Office / Office européen des brevets

(11) **EP 4 509 469 A1**

(12) **EUROPEAN PATENT APPLICATION**
published in accordance with Art. 153(4) EPC

(43) Date of publication:
**19.02.2025 Bulletin 2025/08**

(21) Application number: 23787877.2

(22) Date of filing: **05.04.2023**

(51) International Patent Classification (IPC):
*C02F 3/28* (2023.01)      *C02F 1/66* (2023.01)
*C02F 1/68* (2023.01)      *C02F 11/14* (2019.01)
*B65D 90/503* (2019.01)      *C02F 103/20* (2006.01)

(52) Cooperative Patent Classification (CPC):
**B65D 90/503; C02F 1/66; C02F 1/68; C02F 3/28;
C02F 11/14;** C02F 2103/20

(86) International application number:
**PCT/ES2023/070223**

(87) International publication number:
**WO 2023/198948 (19.10.2023 Gazette 2023/42)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **11.04.2022  ES 202230325
23.06.2022  ES 202230564**

(71) Applicant: **Agrolinera Astur, S.L.
33860 Salas (Asturias) (ES)**

(72) Inventors:
• **GUTIÉRREZ CANSECO, Juan
33005 OVIEDO (ASTURIAS) (ES)**
• **DE LABURU BAYÓN, Miguel
33203 Gijón (ASTURIAS) (ES)**

(74) Representative: **Hernandez Lehmann, Aurelio
Lehmann & Fernandez, S.L.
Calle Álvarez de Baena, 4
28006 Madrid (ES)**

(54) **AIRTIGHT STORAGE TANK AND IMPROVED METHOD FOR ANAEROBIC TREATMENT OF SLURRY OR WHEY**

(57)    Airtight storage tank for the storage of manure (36) and/or whey, and an improved process for anaerobic treatment of manure (36) and whey using the same, with a transport phase (1) comprising a preliminary phase (2) of collection, transfer, control, treatment, and storage of manure (36) that includes waste transport, registration, and discharge into a storage tank (33), and a transport phase (1) under controlled anaerobic conditions following the preliminary phase (2), which involves discharging the contents of the storage tank (33) under anaerobic conditions into a tanker vehicle (14) and transferring (15) the volume of manure (36) removed with the tanker vehicle (14) to a predetermined location.

Fig. 1

## Description

## Technical field of the invention

The present invention pertains to the technical field of anaerobic waste treatment processes for agricultural and livestock waste, particularly manure and whey produced in farms and livestock operations.

## Background of the invention

Manure is an organic waste of animal origin. It consists of animal excrement mixed with urine, water, and other elements (such as straw). Similarly, whey is a by-product of cheese production in these livestock operations that is difficult to manage and has a high potential for pollution.

On farms, and especially in livestock operations, large quantities of these wastes are produced, and their management in small operations poses a series of problems that make it neither economical nor sustainable.

Traditionally, both manure and dung have been used as fertilizer for the land, as nitrogen, among other chemical elements contained in the excrements, has a nutritional function in crops. However, the management of manure as fertilizer presents serious environmental and economic problems, as excessive application to the soil can lead to runoff down slopes and end up in streams, rivers, lakes... or with rain or irrigation water, it can filter through the ground reaching the aquifers. For this reason, the direct use of manure as fertilizer is generally prohibited with some exceptions.

A possible solution to this problem is the processing of manure in biogas plants, where it is transformed into biogas and digestate, for use in energy generation and as fertilizer, respectively.

However, this process is economically viable only for large livestock operations, where the logistics cost per ton is very low and affordable collection rates can be charged. However, in rural areas where extensive and smallholder livestock farming predominates (the most environmentally friendly and producing higher quality products), these costs are unaffordable.

Small livestock farmers generally manage by storing manure in barn pits to later spread it on the field, often exceeding permitted limits. This generates soil quality degradation, water contamination, emits unpleasant odors that harm rural tourism, and poses a health risk to both farmers and livestock.

When opting for removal for gasification or composting, as the volumes of manure produced by these small livestock operations are more limited, they are forced to store it until they have enough quantity for the removal costs to be affordable. Thus, farmers keep depositing the manure in open tanks where an uncontrolled aerobic digestion process spontaneously begins, reducing the gasification potential of the waste.

Since there is no control at the source and since each farm has different storage times, a mixture of very different products with different degrees of aerobic fermentation eventually reaches the biogas plant. This greatly complicates their valorization, as well as establishing corrective measures at the source farm.

Thus, the heterogeneity and variability of manure in physical, chemical, and biological characteristics result in a low yield of anaerobic digestion, causing the composition and volume of the resulting biogas to be unstable and therefore of variable quality, generally poor in methane. Also, impurities in the manure frequently cause breakdowns in gasification facilities, and excess moisture causes excessive discharges at the plant.

All this results in a loss of value of the manure as an input in biogas plants. On the one hand, the frequent breakdowns involve costs and loss of plant availability. On the other hand, the produced digestate has unstable quality, thereby reducing its commercial value, resulting in suboptimal and variable plant production, which harms its revenue.

Moreover, many of these small operations also produce cheese and, in doing so, generate whey as a residue, a waste with moisture content similar to manure which, although smaller in volume, is equally challenging to manage. Whey has a high organic content in the form of lactose, proteins, and other compounds from milk. Its uncontrolled discharge can cause pollution problems with a severe environmental impact. The option to manage whey through energy valorization has gained significant interest in recent years, and among the available energy recovery alternatives is anaerobic digestion in biogas plants. In the case of whey, various digestion facilities have been developed in recent years using different configurations and operating conditions, and it has been identified that some of the factors limiting the application of whey in anaerobic digestion facilities are the tendency to acidify or nutrient limitation.

Therefore, we are faced with two residues with the same livestock origin, which, although different in their physicochemical characteristics, both pose a significant management problem in a rural smallholder environment and both can be valorized in biogas plants. For this reason, the device and method subject of the present invention consider indistinctly one or the other liquid residue, with the proposed solution being equally applicable to improve the anaerobic treatment of both.

Finally, it is important to highlight the difficulty in tracing the origin of the manure or whey and associating it with its quality, which means that corrective measures cannot be established at the source farm and that farmers cannot prove to third parties that they have responsibly managed the waste.

Consequently, the lower value of these manures or wheys, due to all the aforementioned disadvantages, does not compensate for the collection cost, and biogas plants need to charge high amounts to remove them. Again, the small farmer is the most affected, as they cannot afford these amounts, and the easy solution is for them to dispose of the manure by dumping it in the field or illegally dumping the whey, creating the associated problems already indicated.

Moreover, tests have shown that livestock manure collected in storage tanks has a low total solids concentration, about 8%, with a desirable minimum of 12%-15% to optimize the anaerobic digestion processes in biogas plants. This means that, in many cases, the manures consist of nitrogenated water with an organic matter concentration below its optimal levels for gasification in a biogas plant but with a high ammoniacal nitrogen load with fertilizing value that cannot be exploited in anaerobic digestion and complicates its disposal.

Therefore, the consequence is that large volumes of collected manure are being transported, knowing that a large part of it is not usable, given the low organic matter concentration. In short, an excess of water is being transported.

Additionally, another aspect to consider is that many farmers resist discharging the volumes of manure they generate in their livestock facilities, as they need it (particularly the nitrogen contained in the liquid fraction) to fertilize the fields.

Therefore, it is necessary to find a solution to this problem that valorizes livestock manure and whey from small cheese dairies as gasifiable resources, reduces their collection cost, and thus makes their management viable. All this is essential to maintain traditional livestock farming in the countryside while avoiding environmental problems.

**Description of the invention**

The object of the present invention is a storage tank for the treatment of manure or whey and an improved process for such anaerobic treatment of manure and/or whey in biogas plants, for these liquid wastes generated in livestock operations.

The basis of the utility of this process is to valorize the manure and whey by avoiding as much as possible their aerobic degradation in the stages prior to gasification.

In this respect, it should be considered that manure and whey gain more value the fresher they are (and thus the less exposure they have to aerobic degradation), the lower the cost of transporting them to the biogas plant, and the lower the management cost for the farmer.

The degree of aerobic degradation depends on the time of exposure to air before gasification, the temperature throughout the process, and other chemical and biological factors that affect it during storage and processing.

The process and devices of the present invention are configured to optimize all parameters involved in the valorization of manure or whey in this manner.

Once we can guarantee anaerobic conditions in the storage tank during storage and transfer to the biogas plant, the valorization strategy is, by regulating the conditions of the tank, to slow down fermentation to maintain the gasification potential.

In any case, the biogas generated in the tank is transferred to the biogas plant along with the manure and involves using the storage tank as an additional phase of the anaerobic digestion process. Since the transfer from the tank to the plant mixer/digester occurs under anaerobic conditions, any gas generated in early digestion in the tank is transferred to the biogas plant and valorized. However, to the extent that digestion can be slowed, the gasification potential is preserved for use in the digester of the plant, where conditions are more suitable than in the container.

Thus, this document presents an airtight sealed storage tank, for the storage of manure and other liquid wastes such as whey for treatment processes. This storage tank includes at least one pressure control valve, thermal regulation means consisting of thermal insulation and/or devices for heat or cold input, at least one load weighing control cell, and a transfer pump system, with a hose that connects to the storage tank of the transportation means used by the farmer.

This storage tank also includes at least one hose with an adapter, a plurality of sensors for rapid physical, chemical, and/or biological analysis, at least one dispenser for chemical and biological regulators, at least one mixer to homogenize the manure or whey and ensure the dispersion of the dosed chemicals, a loading sampling system, and a rapid emptying system.

As a means of feeding, to supply autonomous energy to the storage tank, it features one or more replaceable batteries, solar panels, and an auxiliary engine.

Additionally, it includes at least one touch interface module with card and QR identification, from which the system is operated with a mobile device, a screen for displaying information, at least one IP video camera, and a central control and communication system 4G or higher, which connects the storage tank with a central server.

This document also proposes an improved process for the anaerobic treatment of manure and/or whey in biogas plants, for manure generated in livestock operations and for whey produced in small dairies, through a airtight storage tank as previously defined.

This process comprises a preliminary phase of collection, transfer, control, treatment, and storage of manure or whey and a phase of transport under controlled anaerobic conditions of said manure or whey to the biogas plant.

The preliminary phase includes a first stage where the farmer electronically searches for a collection point for manure or whey, with availability and proximity. This collection point has, at certain time intervals, a airtight storage tank, as defined, which is refrigerated and thermally insulated, ensuring anaerobic, thermal, and biochemical conditions to optimize the fermentation process. The maintenance of adequate thermal conditions is energetically guaranteed by the placement of replaceable batteries and/or photovoltaic panels on top of the storage tank.

Next, a second stage occurs where the farmer user electronically requests and obtains an appointment to discharge manure or whey from their operation at the nearest collection point. Alternatively, it may involve confirming a pre-scheduled appointment where the farmer has a specific day and time assigned. The invention also contemplates the possibility that the discharge request can be made at another location more convenient for the farmer user.

The following third stage consists of transporting a volume of manure or whey, carried out by the farmer with their own means, to the collection point at the indicated place and time.

Once the farmer arrives at the selected collection point with the volume of manure or whey, a fourth stage takes place consisting of the electronic registration and identification of the farmer, through a digital identification system at that first collection point.

After identification, the farmer can connect the airtight storage tank at the collection point to their transport tank for manure or whey through a hose designed for the extraction and transfer of said liquid wastes. This hose is connected to a pumping system that minimizes air exposure of the manure or whey to avoid odor emission. The hose adapter is versatile and allows its use with a wide variety of tanks. In an alternative embodiment, the use of pressurized $CO_2$ can be considered to eliminate air and, therefore, oxygen in the transfer process.

Following the previous step, a fifth stage begins consisting of the discharge of a determined first portion of the volume of manure or whey into the storage tank during a first time interval.

Subsequently, a sixth stage occurs, where chemical, physical, and biological characteristics of the first portion of the volume of manure or whey discharged are sampled and analyzed automatically, such that when these values do not meet quality limits, the discharge is denied, and when these values are within predetermined quality limits, the discharge of the remaining portion of the volume of manure or whey transported to the first collection point is carried out. The system retains the sample of manure or whey for later reference and analysis. After the discharge of the total volume of manure or whey transported, a charge for the service is made to the farmer's account. Alternatively, a payment may be requested from the farmer user through any known payment method (credit card, PayPal®, etc.). In parallel and automatically, a communication is established between the storage tank and a central server, notifying the data of the discharge and the general data of the content of the storage tank in real time.

On the other hand, the transportation phase of manure or whey, which chronologically takes place after this preliminary phase of collection, transfer, control, treatment, and storage, includes a first stage of moving a tanker vehicle to the storage tank to unload the content of the latter and remove the samples. This occurs when the filling volume of the tank is equal to or greater than 80%, or when a preset time interval has elapsed since the first discharge occurred in that storage tank.

Finally, this tanker vehicle transports the withdrawn volume of manure and connects anaerobically to the mixing module of the biogas plant, which also operates anaerobically and feeds the digesters. The manure or whey and the biogas generated in the tank are transferred to the biogas plant by pumping and injection, respectively, with the pumping time being recorded and associated with the parameters of the liquid waste delivered. In this way, a correspondence can be established between these parameters and the gasification results of the plant for subsequent analysis and optimization starting in the collection tank.

With the improved anaerobic treatment process of manure or whey proposed here, a significant improvement over the state of the art is achieved.

This is so because a process is achieved through which the collection, treatment, and storage of manure or whey control its quality on admission and regulate the conditions and times of fermentation prior to its use in the biogas plant, thus increasing its gasification potential and its value as a resource.

Thus, this process achieves an almost total reduction of unwanted aerobic fermentation times and processes, as well as an efficient and controlled collection of manure or whey in an anaerobic environment, maintaining their gasification potential. In this way, the manure or whey that reaches the biogas plant is more homogeneous, increasing the plant's yield and therefore the final product.

The sealed process, under anaerobic conditions of all previous steps not only reduces the degradation of manure or whey, but also avoids the generation of odors in the environment.

On the other hand, the measurement and control of the chemical, physical, and biological parameters of the manure or whey to be processed, rejecting unqualified loads, allows avoiding possible breakdowns and optimizing the treatment process, since in case of deviations it is possible to correct them before their arrival at the biogas plant. This achieves that the manure or whey that reaches the biogas plant presents an adequate quality, thus the quality of the biogas and digestate obtained in the plant is more stable and increases their commercial value.

Additionally, since it is the farmers themselves who transport to the mobile storage tanks, the tanker vehicle only has to access the collection points and quickly load (and in the absence of air) its entire tank. In this way, it avoids having to make multiple trips to different farms to make partial loads. This aspect, along with the increase in the quality of the product obtained in the biogas plants, allows reducing the collection rates applied to small farmers, making them also acceptable for smallholder operations.

Furthermore, it is a flexible system, in which the collection points and the parking periods of the storage tanks at them are determined based on the local circumstances of each area and can be easily scaled by adding more tanks or modifying routes, which may be influenced by seasonal variations in stabling or changes in livestock operations. It is a modular system that can grow as it becomes more accepted by farmers.

This process allows farmers to manage themselves, since, outside of the pre-established days and hours, there is flexibility to use the storage tanks available at the time and place that best suits them.

Moreover, traceability of the origin of the manure or whey is achieved to implement preventive measures in the source livestock operation and obtain consistent manure or whey. With this process, it is possible to record, homogenize, and control the quality of the liquid waste when collected from a large number of small, scattered livestock operations and sent to large biogas plants. Thanks to this traceability, it is possible to identify systematic problems in the stables and talk with the farmers to correct them at the source.

This system can be scaled and adapted to the socioeconomic and communication characteristics of any territory.

The payment and communication technology during the process allows the digitalization of the management of these liquid wastes. With this, in addition to a very efficient use of facilities and equipment, a large amount of data and information are obtained that give transparency to this operation and allow new applications on these data.

The entire process is controlled by a central server, which geolocates and monitors the state of the containers and allows obtaining data from the process in real time. These data are used to apply artificial intelligence technologies to them and enable machine learning of the anaerobic gasification process.

Moreover, it is a process with a minimal carbon footprint, since the tanker trucks that carry it out operate on biomethane produced from the waste they transport. Thus, circularity is applied in the value chain, and additional savings in operation are achieved.

Also, in processes where it is necessary to use compressed gas in contact with the manure or whey, it is possible to use, instead of air, $CO_2$ produced in the methanization module of the biogas plant. This avoids the contact of manure or whey with air and the consequent oxygenation, increasing the circularity of the process.

With this process, the conversion of a harmful waste into a valuable resource is possible, making its collection economically viable in an environment where it would not be otherwise.

By solving the problem of manure and whey disposal, it not only contributes to the maintenance of the environment in rural areas, but it does so by creating activity, investment, and quality employment in the rural world.

With this process, it is possible to digitalize the comprehensive management of livestock waste and exploit the data obtained in this digitalization. By doing so, efficient use of the infrastructure is achieved, and low operation costs are maintained, and it opens the door to future innovations based on these data.

This system allows and encourages compliance with European regulations on manure by farmers. Failure to comply endangers EU Common Agricultural Policy aids to livestock farming and therefore its survival and the maintenance of the rural population.

Furthermore, for the case of manure, this process may present an additional phase in the preliminary phase that allows an additional improvement over the state of the art derived from the possibility of obtaining, after the preliminary collection phase, a concentrated manure that is the one transported to the biogas plant in the initial phase and is optimal for its gasification. In this way, the transport of large volumes of manure with a low concentration of solids from which only a small part can be exploited is avoided, after having to concentrate them.

By achieving concentrated manure prior to its transport to the biogas plant, a more effective process is achieved, and a significant increase in its performance is achieved, significantly reducing costs. Its performance in the digester of the plant is also improved by increasing the Carbon/Nitrogen ratio of the manure with the concentration of organic matter.

Also, in the case of manure, with the concentration of manure, a surplus is obtained consisting of a volume of nitrogenated water that is suitable for use as sterile fertilizer and, as this concentration is carried out at the collection points themselves, close to the livestock operations, farmers and ranchers can withdraw the fertilizer they require throughout the day.

In this way, it is possible to manage manure for transport to biogas plants that is effective and profitable for all farmers, and at the same time, they can continue to have part of it as fertilizer, thus avoiding the rejection that the delivery of manure could generate given the problem that it could pose for them to be without fertilizer for their fields.

Therefore, it is a very effective process with which an increase in the performance of the biogas plant is achieved and at the same time a better use of the manure, as a part is destined for the production of biogas and digestate, and another is still used by the farmers themselves as fertilizer without the inconveniences (odors, pathogens...) that the direct application of contaminated and biologically active manure involves.

## Brief description of the drawings

To aid in a better understanding of the features of the invention, in accordance with a preferred practical embodiment thereof, a series of drawings is provided as an integral part of said description, where, for illustrative and non-limiting purposes, the following has been depicted:

**Figure 1.** Shows a block diagram of an improved anaerobic treatment process of manure, for a first preferred embodiment of the invention.

**Figure 2.** Shows a block diagram of an improved anaerobic treatment process of manure, for a second preferred embodiment of the invention.

**Figure 3.** Shows a schematic view of an Intermediate Treatment Center (ITC) of an improved anaerobic treatment process of manure, for a second preferred embodiment of the invention.

**Figure 4.** Shows a block diagram of an improved anaerobic treatment process of manure, for a third preferred embodiment of the invention.

**Figure 5.** Shows a schematic of the entire storage tank and the additional tank used in the process, for a third preferred embodiment of the invention.

**Figures 6. 1 to 6.3.** Show a schematic of the placement of the storage and additional tanks throughout the day, for a third preferred embodiment of the invention.

## Detailed Description of a Preferred Embodiment of the Invention

In a first preferred embodiment of the invention, the proposed airtight and thermally insulated storage tank (33) for the storage of manure (36) or whey for subsequent treatment is equipped with the following technical means:

- At least one pressure control valve
- At least one load weighing control cell
- A transfer pump system, with a hose that connects to the transport medium used by the farmer
- At least one hose with an adapter
- A plurality of sensors for rapid physical, chemical, and/or biological analysis
- At least one dispenser for chemical and biological regulators
- At least one mixer to homogenize the manure or whey and ensure the dispersion of the dosed chemicals
- A sampling system at the loading point and storage of sampled specimens
- One or more replaceable batteries, solar panels, and an auxiliary motor, to supply autonomous power to the container
- Thermal regulation means consisting of thermal insulation and, optionally, devices for heat input (e.g., a resistor) or cooling (e.g., coolants)
- A rapid emptying system
- At least one touch interface module with card and QR identification, from which the system is operated with a mobile device
- A display screen for information
- At least one IP video camera
- A central control and communication system 4G or higher, connecting the storage tank (33) to a central server

In this first preferred embodiment, the plurality of rapid sensors for physical, chemical, and/or biological analysis includes one or several of the following: sensors for rapid analysis of pH, conductivity, hardness, COD, temperature, suspended solids (estimated from density), total nitrogen, nitrates, ammonia, and organic nitrogen, phosphorus, sulfates, potassium, copper, and zinc.

This document also presents an improved process for the anaerobic treatment of manure (36) and/or whey, in biogas plants (24), for manure (36) produced in livestock operations or whey produced in dairies. The proposed process includes a transport phase (1) under controlled anaerobic conditions of said manure (36) or whey to the biogas plant (24).

This improved process further comprises a preliminary phase (2) of collection, transfer, control, treatment, and storage of manure (36) or whey, prior to the transport phase (1), where this preliminary phase (2) includes a first step consisting of a search or location by the farmer, using an electronic device, for the location (3) of at least one first collection point for manure (36) or whey, in which a airtight storage tank (33) is temporarily located ensuring the maintenance of anaerobic conditions.

In this first preferred embodiment, the process has two or more collection points, distributed in a first action zone, and the storage tank (33) has an itinerant position among these collection points according to a route of locations for the same.

The fact that the storage tanks (33) are mobile gives the system great flexibility as the location of the storage tanks (33) can be modified depending on the local circumstances of each area and can be varied by easily adding more tanks or modifying routes, which may be influenced by seasonal variations in stabling or changes in the livestock operations. This process allows farmers to freely select the storage tanks (33) at the time and place that best suits them.

The spatial and temporal distribution of the storage tanks (33) is managed by an operator who, as described in the transport phase (1) of the manure (36) or whey, travels with a tanker truck or vehicle (14) to the storage tanks (33) in his area or areas of action to empty them and subsequently transfer (15) the removed manure (36) or whey to the biogas plant (24). An action zone includes a plurality of collection points. This emptying is done through the rapid emptying system located at the back of the storage tank (33). In this operation, the operator collects the samples from the previous day's loads, checks the levels of reagents in the dispenser, and the charge of the battery and auxiliary motor.

When the operator empties all the storage tanks (33) in the areas of action, he returns to their positions, this time with a flatbed truck, where he loads a storage tank (33) and takes it to the next collection point that corresponds to him according to the itinerary assigned to said tank, all according to a pre-established temporal schedule.

In this way, the storage tank (33) is not fixed in one position, but moves through a plurality of collection points established according to a schedule that can have a weekly periodicity -the most common- or another that is aligned with the objectives. The number of collection points per action zone may be different in each case.

With this, the storage tanks (33) cover the routes of their action zone to maximize the number of livestock farms or dairies they can serve with an acceptable frequency and each farmer has an assigned day and point to unload the manure, ensuring that the container is used regularly and by a high proportion of the livestock farms in its action zone.

Additionally, and this is important from a treatment perspective, it ensures the removal of the manure (36) or whey once they have been deposited in the storage tanks (33) by the farmers within a period shorter than 24h - 48h, preferably less than 24h. This is very important because the initiation of anaerobic fermentation processes involves a very strong initial acidification that starts in the first 48-72h. Having controlled the exact moment when a farmer has deposited his manure (36) or whey in the storage tank (33) and ensuring that they will be transported to the biogas plant (24) in less than 48h, we are ensuring that the acidification process of the manure (36) or whey has not begun, and therefore no problems will arise at the time of reception at the biogas plant (24).

In this first mode of embodiment, preferably the process has at least two action zones, although in other modes of embodiment there may be a greater number of zones. In this way, high utilization of the collection infrastructure is ensured, as well as the continuous and efficient supply of manure or whey to the biogas plant (24).

Once the collection points have been fixed in the previous stage of searching for locations (3), the process continues through a second stage of obtaining an appointment (4) by the farmer, using an electronic device, to perform a discharge of manure (36) or whey from the farm at the nearest collection point or the most convenient one.

For this, the farmer is registered in the system (or must register the first time they use the system) and searches the internet using an electronic device (PC with a web browser or a smartphone with an app) for the availability and location of the nearest collection point to their livestock operation, and the routes and schedules available.

The farmer uses his own trailer tank or equivalent means to carry out the third stage consisting of the transport (5) of a volume of manure (36) or whey, to the first collection point at the indicated place and time, according to the appointment (4) obtained.

Once there, the fourth stage of the process consisting of the registration and identification (6) of the farmer, telematically, at the first collection point is carried out. The registration and identification (6) are carried out telematically, for which the storage tank (33) has the necessary means, as detailed above, since it is equipped with a touch interface module with card and/or QR identification, from which the system is operated with an electronic device and which functions similarly to an ATM.

After successful identification, the system authorizes the discharge of the manure (36) or whey. For this, the farmer connects the hose from the storage tank (33) to his trailer tank or equivalent transport means, and the fifth stage of the process consisting of the discharge under anaerobic conditions of a first determined portion (7) of the volume of manure (36) or whey into the storage tank (33) takes place, during a first time interval that will be automatically controlled by the system.

The sixth stage consists of a sampling and analysis (8) automated of chemical, physical, and/or biological characteristics of the first portion of the volume of manure (36) or whey discharged. The system obtains a physical sample of the manure or whey discharged thus conserving the sample, which is stored and kept by the operator for later reference, being registered to the user it corresponds to and the time of discharge. This sampling also allows, in addition, to provide other types of value-added services to the farmers, for example, controlling the presence of pathogens in the samples taken that could indicate diseases or risks of the livestock from which they come.

For this, in this first preferred mode of embodiment, the storage tank (33) includes automated control means of variables formed by the pressure, the weight of the load, and rapid sensors for the analysis of various chemical, physical, and/or biological parameters of the volume contained within. It also includes internet connection means of the storage tank (33) with central control means.

The number and type of rapid sensors for the analysis of chemical, physical, and/or biological parameters may vary from one case to another, but preferably sensors for rapid analysis of pH, conductivity, COD, temperature, suspended solids (estimated from density), nitrogen, and phosphorus are considered. This analysis is recorded and associated with the identity of the farmer.

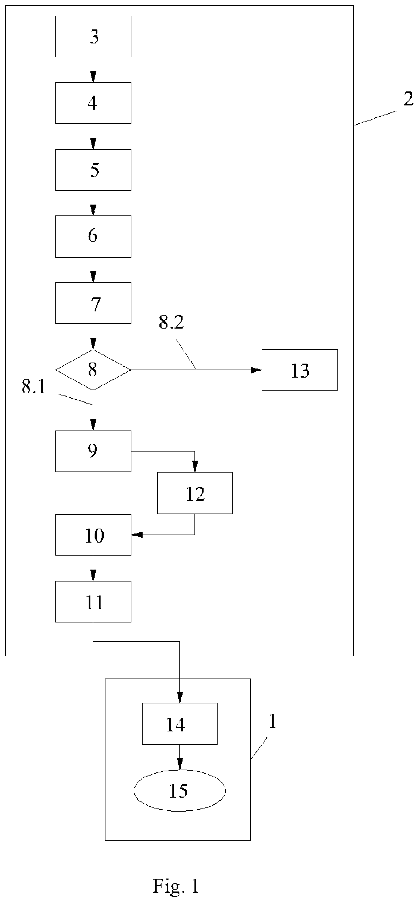

As shown in Figure 1, if the values obtained from the sampling and analysis (8) are included within predetermined quality limits (8.1) a seventh stage consisting of the discharge of the remaining portion (9) of the volume of manure (36) or whey transported to the first collection point takes place.

Once all the volume of manure (36) or whey has been discharged by the farmer, and thus the volume and weight discharged have been determined, the next stage consists of the payment (10) of the service amount by the farmer. The last stage of this preliminary phase (2) consists of the communication (11) automated from the storage tank (33) with a central server, notifying the quantitative and qualitative data of the discharge in real-time. This communication (11) initiates the hourly control for the withdrawal of the discharge, because as mentioned earlier, the process must ensure that the manure (36) or whey discharged do not take more than 48-72h to reach the biogas plant (24).

Additionally, in this first preferred mode of embodiment of the invention, the process includes an additional stage of optimizing the quality (12) of the manure or whey contained in the storage tank (33), after the stage of discharging the remaining volume (9) in the same. To this end, the storage tank (33) includes dispensers for reagents and enzymes, and mixers of the same in the volume of manure (36) or whey, to perform this optimization.

Anaerobic digestion is a fermentation process involving different types of bacteria at different stages. These stages overlap temporally and begin already in the animal digestion process. The manure or whey arrives at the storage tank (33) at different degrees of maturity depending on the livestock. The object of the invention is to regulate the conditions in the storage tank (33) to adjust the state of the mixed volume to the optimal level of composition and bacterial activity at the moment of its delivery to the biogas plant (24).

Sensors measure the volume of the load in the tank and the composition of the manure or whey contained in it. Based on this, the dispensers can inject certain regulatory elements, reagents, or enzymes that optimize this mixture, and a mixing system distributes it in the volume of the tank.

The type and characteristics of the regulatory elements, reagents, or enzymes are different according to the circumstances of each case. As a simple illustration and without intending to be exhaustive in listing, the following can be mentioned:

1. Plant substrate: In the case of manure, it serves to raise the Carbon/Nitrogen (C/N) balance of the manure and increases the substrate, which increases its gasification potential when there is no straw bed in the mix.
2. Water: serves to dilute, decreasing the concentration of toxins and inhibitors such as ammoniacal nitrogen in the manure that reduces bacterial activity, and harms the gasification potential.
3. pH regulators: In the different stages of anaerobic digestion, an imbalance between the production and consumption of volatile fatty acids can occur. The accumulation of these acids can cause a decrease in pH, especially harming methanogenic bacteria, which inhibit their growth at acidic pH To maintain the pH at a value close to neutral, pH regulating reagents such as lime can be used to increase the pH of the mixture that tends to acidify as fermentation begins.
4. Nutrients: to maintain a healthy biomass, bacteria need a substrate with balanced amounts of carbon, nitrogen, and phosphorus. Therefore, organic matter or nitrogen in organic or inorganic form, as well as phosphorus, which is normally supplied in the form of phosphate, can be provided.
5. Minerals: Maintaining a healthy biomass also involves the presence of other trace mineral elements such as sulfur, potassium, sodium, calcium, magnesium, and iron. The present invention contemplates the addition of these compounds if necessary.

In general, all these regulatory elements are aimed at preserving the manure or whey in the best possible conditions, and thus maintaining the maximum gasification potential of these liquid wastes until the biogas plant (24). However, this strategy may be modified according to the actual results obtained for each plant, and perhaps in some cases, a controlled start of anaerobic processes before arrival at the biogas plant (24) may be of interest.

In the case where the values from the sampling and analysis (8) do not meet (8.2) the quality limits, the discharge (13) is denied, and the storage tank (33) stores a physical sample of the discharged manure.

Moreover, the transport phase (1) includes a first stage of anaerobic discharge of the content of the storage tank (33) into a tanker truck or vehicle (14) moved to it, when its filling volume reaches a certain pre-established volume (normally close to 80%) or when a predetermined maximum time interval has elapsed since the first discharge occurred in that storage tank (33).

In this first preferred mode of embodiment of the invention, this maximum predetermined time interval, as indicated, is 24h - 48h, from the first discharge in the storage tank (33), and in this case is preferably less than 24h. Both the filling level and the time interval are controlled automatically from the central server which is responsible for issuing the appropriate orders to the operator for withdrawal if necessary.

As shown in Figure 1, in this first preferred mode of embodiment, the transport phase (1) includes a second stage of transferring (15) the volume of manure (36) or whey contained in a storage tank (33) by a tanker truck or vehicle (14), to the biogas plant (24).

The storage tank (33) of each action zone is remotely monitored and controlled through the central control means. When it is necessary to empty it or replace its batteries, or when an incident occurs, a signal is sent to the operator to move with a tanker truck (14) to empty it and take the manure to the biogas plant (24). Likewise, when there are deviations in the parameters of the manure that have not been able to be solved on the fly, the operator can make corrective interventions when delivering it to the biogas plant (24).

Thus, in this first preferred mode of embodiment of the invention, the operator begins his work by moving to the storage tanks (33) of his area or areas of action with a service tanker truck or vehicle (14) to empty them and transfer (15) their contents to the biogas plant (24). This emptying is done through rapid emptying means located at the rear of the storage tank (33). In this operation, the operator collects the samples from the previous day's loads, checks the levels of reagents in the dispenser, checks the state of the instrumentation, and the charge level of the battery and auxiliary motor.

When he empties all the storage tanks (33) of the or the action zones, the operator returns to their positions, this time with a flatbed truck, where he loads a storage tank (33) and takes it to the next collection point that corresponds to him according to the itinerary assigned to said tank according to the pre-established temporal programming.

In this first mode of embodiment, shown in Figure 1, the transport phase (1) includes a second stage of transferring (15) the manure (36) or whey, following the first stage of moving a tanker truck (14) to the storage tank (33) for emptying its contents.

In this second stage, the transfer (15) of the volume of manure (36) or whey contained in a storage tank (33) is carried out by a tanker truck o vehicle (14), from the first collection points to an Intermediate Treatment Center (25) which includes at least one sealed reception tank (26) that guarantees the maintenance of anaerobic conditions. This tank may be buried in a permanent installation or confined in a surface container if the ITC is configured as a mobile installation.

In other preferred modes of embodiment of the invention, this transfer stage (15) takes place from one or more first collection points to the biogas plant (24). In this case, the tanker truck or vehicle (14) connects anaerobically to the mixing module of the biogas plant (24), and the manure or whey and the biogas generated in the storage tank (33) are transferred to the biogas plant (24) by dumping and injection respectively, with the dumping time being recorded and associated with the parameters of the manure delivered.

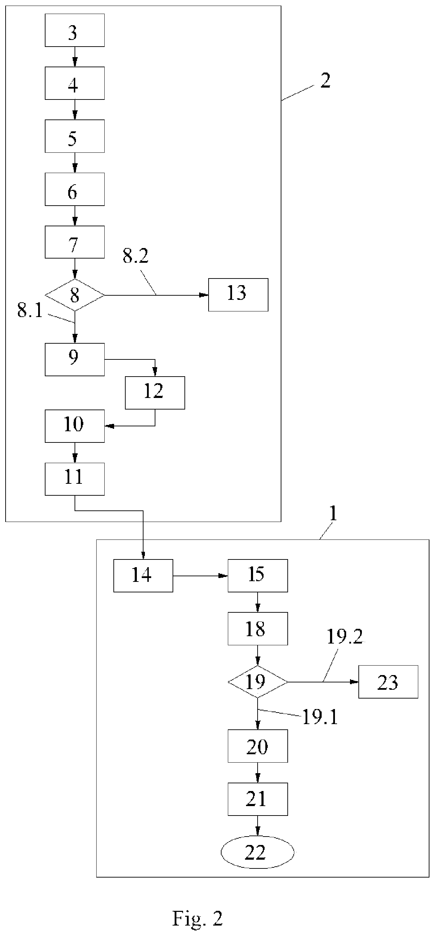

This document also presents a second preferred mode of embodiment of the invention which, as can be seen in Figure 2, includes an additional stage of discharging (18) of the tanker trucks or vehicles (14) into said reception tank (26) followed by a sampling and analysis (19) of the chemical, physical, and/or biological characteristics of the discharged volume of manure (36) or whey.

As shown in Figure 2, in this second preferred mode of embodiment of the invention, if the values obtained from sampling and analysis fall within predetermined limits of homogeneity and/or quality (19.1), the process also includes a derivation (20) of the volume of manure (36) or whey to a sealed processing tank (27) for undergoing pretreatment processes similar to those described in the first mode of embodiment but on a larger scale. This includes a first transfer (21) of the stored volume from the processing tank (27) to a dispatch tank (28), and a second transfer (22) from there to the biogas plant (24) using one or more tanker trucks (14).

In cases where the values obtained from the sampling and analysis do not meet (19.2) the limits of homogeneity and/or quality, the process involves a derivation (23) of the volume of manure (36) or whey from the reception tank (26) to a waste tank (30) for disposal or transfer to a wastewater treatment plant (29) or controlled landfill. This waste tank (30) can be buried or confined within a separate container.

During the pretreatment processes, the excess water generated in the physical process is treated and evacuated to a nearby wastewater treatment plant (29) once it meets the required discharge conditions or to a designated tank for this purpose.

In this second preferred mode of embodiment, the pretreatment of manure (36) or whey includes one or several of the following actions:

- Dosing of pH-regulating chemical agents.
- Dosing of nutrients and/or minerals necessary for the metabolism of the various families of bacteria involved in the anaerobic digestion process.
- Mixing of manure with plant waste to regulate the Carbon/Nitrogen ratio.
- Dilution of manure with water to lower the concentration of toxic elements or inhibitors of bacterial metabolism.
- Thermal regulation to optimize the anaerobic digestion process.
- Adjustment of the granularity and viscosity of the manure or whey to enable pumping using dilution or concentration units.

In this second preferred mode of embodiment of the invention, the tanks (26, 27, 28, 30) of the Intermediate Treatment Center (25) include measurement and control means for the most relevant variables of the manure and/or whey concerning their subsequent anaerobic digestion. These variables include at least the pressure, the weight of the load, and chemical, physical, and/or biological parameters of the volume contained within. Among the most relevant physicochemical parameters for proper control of the treatment process of manure (36) and/or whey, we can highlight: pH, conductivity, hardness, COD, temperature, fixed and volatile suspended solids, total nitrogen, nitrates, ammonia, organic nitrogen, phosphorus, sulfates, potassium, copper, and zinc.

This invention contemplates the provision of rapid sensors for the analysis of the mentioned chemical, physical, and/or biological parameters. The number and type of sensors can vary from one case to another, but sensors for rapid analysis of pH, conductivity, hardness, COD, temperature, fixed suspended solids (estimated from density), nitrogen, phosphorus, sulfates, potassium, copper, and zinc are preferably considered.

The logic of the regulation and pretreatment process is similar to that defined in the first mode of embodiment, but on a larger scale. Therefore, the pretreatment processes are similar (thermal regulation, dosing of chemicals, etc.), although since in this case they are performed in a fixed, permanent, or containerized facility (the tanks of the Intermediate Treatment Center (25)) and not mobile, they can be carried out more efficiently and at a lower cost. Thus, this second mode of embodiment also contemplates the addition of regulatory elements, reagents, or enzymes that may consist of one or several of those previously listed for the first preferred mode of embodiment.

Additionally, in this second mode of embodiment, considering that the Intermediate Treatment Center (25) is ideally located near a wastewater treatment plant (29) when possible, another important regulatory element made up of sewage sludge from the biological reactor can also be considered. The function of these sludges is to enhance the gasification process. The selective addition of sludges with a high organic content can be beneficial as this concentration of microorganisms is transferred to the manure and accelerates the metabolism of bacteria in the digester.

Another possible pretreatment in this second mode of embodiment could involve adjusting the granularity and viscosity of the manure to enable its pumping and transfer by large tanker trucks (14) to the receiving biogas plants (24). This is primarily achieved through the use of dilution units (adding water) or concentration units (any known sludge thickening means) and mixing and homogenization methods.

Moreover, all the sealed tanks (26, 27, 28, 30) of the Intermediate Treatment Center (25) include internet connection means with the central server and means for the periodic monitoring and control of the data collected in them.

The main function of an Intermediate Treatment Center (25) is to record, homogenize, and control the quality of the manure or whey when it is collected from a large number of small, scattered livestock operations, before being sent to large biogas plants (24). As can be easily understood, when the origin of the manure (36) or whey is very varied, coming from many livestock operations each with their own management systems, significant differences in the physicochemical composition of the manure (36) or whey can easily exist. Feeding a biogas plant (24) with manure (36) or whey of variable quality leads to significant operational problems. For this reason, the homogenization performed at the intermediate treatment centers (25) contributes significantly to improving the production and quality of biogas at the treatment plants.

This system, in its second mode of embodiment, can also be scaled and adapted to the socioeconomic and communication characteristics of the territory, incorporating much flexibility in the process. Thus, a biogas plant (24) can be fed not only by one Intermediate Treatment Center (25) but by two, three, or a greater number of Intermediate Treatment Centers (25) located in areas further from the plant and/or an Intermediate Treatment Center (25) can simultaneously serve several biogas plants (24).

Each Intermediate Treatment Center (25) covers several action zones that are served by an itinerant storage tank (33) at its collection points. They also feature a maintenance area (31) for the fleet of tanker trucks (14), where the vehicles and tanks of their area of operation are repaired and maintained, and an operation area (32) where the process is monitored and operated, the operation is administered, and the routes of the service vehicles are managed.

The Intermediate Treatment Centers (25) monitor in real-time the characteristics and conditions of the fermentation process simultaneously in a number of containers over time and are in constant coordination with the biogas plants (24) they serve to ensure that the characteristics and volumes of the manure or whey sent optimize their operation and capacity.

In the first and second preferred modes of embodiment presented here, the central server includes artificial intelligence algorithms integrated into it, for optimizing the operation of the variable control means of the tanks.

Thus, the data obtained by an Intermediate Treatment Center (25) over many collections of manure or whey can be centralized and combined with the operational data of the biogas plants (24) in the process of this manure (36) or whey. This allows for the application of artificial intelligence algorithms or machine learning, to generate knowledge about the process. In this way, for example, it is possible to determine which is the optimal pretreatment model for manure and/or whey during the process that optimizes this operation. It is also possible to optimize gasification conditions based on the characteristics of the served manure or whey.

The system also allows for the integration of the knowledge obtained in this way into the process, correcting it in real-time to achieve ideal characteristics. Thanks to the connectivity of the key elements, this can be implemented in real-time by applying artificial intelligence technologies to these elements. For example, the additive dispensers in the storage tanks and in the Intermediate Treatment Centers (25), which are connected to the central server, can automatically adjust the levels of enzymes and chemicals in the manure or whey based on the state of the system to optimize the process automatically without human intervention.

In the second preferred mode of embodiment of the invention, the tanks of the Intermediate Treatment Center (25) are confined in a container or located underground, and interconnected among themselves through a system of pipes and pumps. As the tanks are confined, odors are avoided and at the same time, the maintenance of the fleet of containers and vehicles on the surface is allowed, which permits better land use. Obviously, all the tanks are sealed and thermally insulated to ensure anaerobic and thermal conditions of the manure or whey at all times.

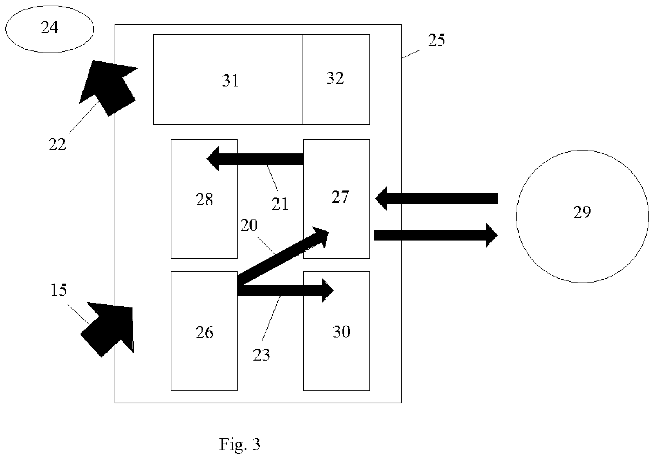

As shown in Figure 3, in this second mode of embodiment, the process tank (27) is connected to a wastewater treatment plant (29) or to a wastewater tank that is frequently evacuated.

With these Intermediate Treatment Centers (25), it is possible to maintain the quality of the supply of manure or whey in large quantities to biogas plants (24). The fact that the manure or whey is supplied with homogeneous characteristics and with predictable availability allows the biogas plant (24) to operate according to design, without odors, breakdowns, or large variations in production. The consistency in the specifications of the manure or whey ensures that the residual digestate is also consistent and can be better valued as fertilizer or compost.

These Intermediate Treatment Centers (25) are located near major communication routes which allows access for large tanker trucks (14) to load the processed manure or whey. Additionally, by integrating next to wastewater treatment plants (29), they allow the elimination of wastewater in them and improve the operation of the wastewater treatment plants (29) by unloading some of the sludge generated in them. That is, the incorporation of sludge from an urban wastewater treatment plant (29) to the manure (36) or whey before its transfer to the biogas plant (24) is contemplated as part of this invention. The incorporation of these sludges aims to balance and enrich the biological composition of the manure (36) or whey to be anaerobically digested and enhance the fermentation process in the hours prior to its delivery to the plant.

Moreover, through central control means, the Intermediate Treatment Centers (25) are coordinated and the state of the containers is monitored in real-time, routes are planned, operations in them are controlled, and coordination with the biogas plant customers is managed. This centralization of information allows the system to operate with high availability at all times, at low cost, and with continuous and predictable deliveries of supply to the plants, which increases the utilization of their capacity and, therefore, their profitability.

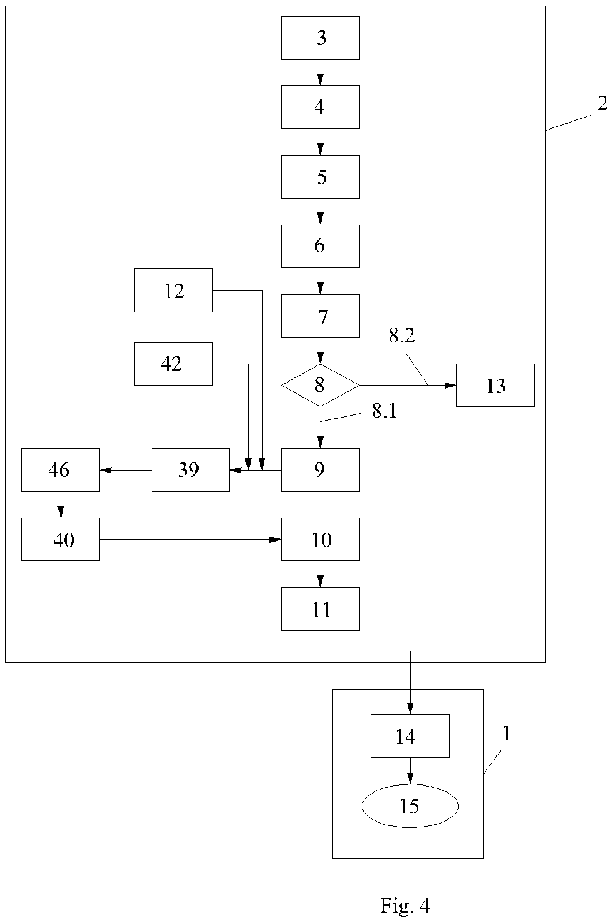

Figures 4, 5, and 6.1 to 6.3 show a third preferred embodiment of the invention that applies only to manure, not to whey.

As shown in Figure 4, the method proposed here comprises a transport phase (1) of the manure (36) to the biogas plant (24) and a prior phase (2) to this transport phase (1), of collection, transfer, control, treatment, and storage of manure (36) that is different from those defined in the two preferred embodiments of the invention mentioned above from the moment of transfer to the storage tank (33) and that positively conditions the transport phase (1), whose operation is similar.

In this third preferred mode of embodiment of the invention, the process includes an additional stage of quality optimization (12) of the manure (36) contained in the storage tank (33), after the discharge stage (9) of the remaining portion in the same, where the storage tank (33) includes dispensers of reagents and enzymes, and mixers of the same in the volume of manure (36) to perform this optimization.

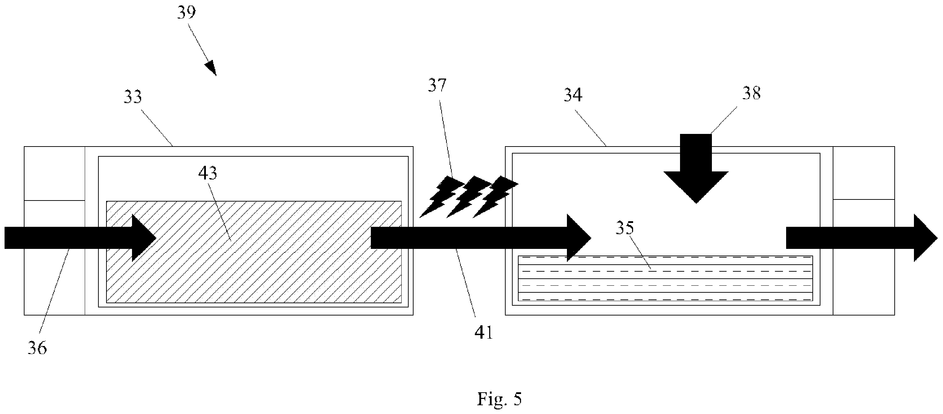

In this case, the process includes a complementary stage, in the prior phase (2), after the discharge stage (9) of the volume of manure (36) in the storage tank (33). This complementary stage consists of the concentration (39) of the organic matter in the storage tank (33), using an additional tank (34) that is positioned next to the storage tank (33), as represented in Figure 5, at least during nighttime hours and is connected to it, for the transfer of excess nitrogenated water to the additional tank (34), forming in it a sterile liquid fertilizer (35).

To achieve the desired concentration, during the night a filtration (41) and sterilization (37) of the excess nitrogenated water is carried out, which is transferred to the additional tank (34), obtaining a concentrate (43) of the manure in the storage tank (33) and accumulating a sterile liquid fertilizer (35) in the additional tank (34).

To control the concentration of total solids, and ensure that a value between 12% and 15% is reached, a flow meter and a weighing cell are used. From the efficiency of the filtration and the original content of solids, it can be determined what volume of manure (36) needs to be filtered to obtain the desired concentration.

The formula applied is as follows:

$$T = \left[\frac{C_S \times C_e}{C_t - C_S(1 - C_e)}\right] - V_1$$

Where: T = Volume to be transferred; $C_S$ = Original concentration; $C_e$ = Filtration efficiency; $C_t$ = Target concentration; $V_1$ = Original volume (at original concentration)

Furthermore, to control how much excess water is transferred to the additional tank (34), the content of solids in the storage tank (33) is monitored by measuring, for example, the electrical conductivity value, as there is a positive correlation between the electrical conductivity of the manure (36) and the dry matter content, with a correlation value of 0.627.

Thus, knowing the original dry matter content and the efficiency of the filtration, it is possible to calculate how much volume needs to be transferred to the additional tank (34) to achieve a certain concentration in the storage tank (33). Other variables may include density or biochemical oxygen demand (BOD).

The additional tank (34) is a device for receiving, modifying, and distributing the filtered and pretreated volume of the liquid part of the manure (36). It is very similar in structure to the storage tank (33), although its functions are different. The most relevant functionalities of this additional tank (34) are:

- Admission of a volume of nitrogenated water
- Performing a second filtration and return to primary
- Sterilization of a volume of nitrogenated water
- Modification of the biochemical characteristics of this volume by enriching it for fertilization
- Distribution of this "fertilizer" volume by pumping to the farmers

The greatest value of this additional tank (34) lies in its ability to improve the manure (36) by concentrating its organic matter and converting the excess into fertilizer that can be distributed on demand. The distribution of the "fertilizer" volumes is done on reservation through the same portal used to make the discharge reservation.

The conversion of manure (36) into fertilizer is carried out by filtering (41) and concentrating in the storage tank (33) the solid matter of the manure (36), sterilizing (37) the filtered part during its transfer to the additional tank (34), and modifying it by adding additional nutrients (38) to the nitrogen already incorporated in the filtered water.

**Seasonality:**

Another advantage derived from this third mode of embodiment is related to the seasonality of fertilizer demand, which is very important. The generation of manure (36), due to seasonal variations in stabling, also varies. However, they are not synchronized. This means that there are months when there is an oversupply of fertilizer (winter) and others when there is an excess demand (spring-summer).

When there is an oversupply, the additional tank (34) tends to fill up since farmers withdraw less filtered water than is generated. In these cases, through a service tank, an additional operation is carried out consisting of emptying the additional tank (34) and sending it for storage in a depot at the biogas plant (24). This is the case when, by weight, the content of the additional tank (34) exceeds the transport amount or if, together with the volume expected to be filtered that night, it exceeds the capacity of the additional tank (34). For this purpose, the additional tank (34) also has a weight sensor and a communication system.

Conversely, when there is excess demand, this service tank carries out the additional operation of completing the filtered load from the additional tanks (34) with the fertilizer stored at the biogas plant (24) from the excess withdrawals of previous months.

Regardless of whether the distribution is made directly from the tank or is stored seasonally, it is the manure collection and pretreatment system that allows the generation of this fertilizer. By concentrating the solid from the manure in the storage tank (33), the system allows transforming the excess nitrogenated water from the manure with a minimum solid in the additional container and distributing it from this to the farmers and agriculturists in the area.

**Sterilization (37) of fertilizing solution:**

In the complementary stage where the organic matter is concentrated in the storage tank (33) and the excess nitrogenated water is transferred to the additional tank (34), the percentage of organic solids is reduced, and therefore, much of the bacterial load in the content of the additional tank (34).

Assuming that the efficiency of separation is 70% in each phase and the original organic matter content of the manure is 8%, the final concentration after the double filtration is as follows:

$$8\% \times (1\text{-}70\%) \times (1\text{-}70\%) = 0.72\%$$

As schematically shown in Figure 5, the sterilization (37) of the filtered flow is carried out by UV radiation applied in the conduit transferring the filtered material to the additional container. It is a process that does not consume much energy and eliminates the biological load remaining after the filtration (41) before transferring it to the additional container.

**Filtration (41) and transfer of fertilizing solution:**

In this third mode of embodiment, the concentration and transfer are done by pumping or by injecting $CO_2$ under pressure into the storage tank (33) and connecting it to the additional tank (34) through a membrane or filter.

The filtration system is installed inside each container or tank. Filtration (41) is thus carried out in two phases. In the first phase, the 8% manure is filtered inside the storage tank (33). Assuming a filtration efficacy of 70%, the filtered volume reduces the solid concentration to 2.4% of the total, which is stored in the chamber of the storage tank (33).

This volume is then transferred, by pumping or pneumatics, to a pre-chamber in the additional tank (34). In the additional tank (34), a second filtration is performed to pass to a main chamber of the same. In this phase, if we assume the same filtration efficacy, the concentration is reduced by 70%, leaving the final concentration at 0.72%. Finally, the residual volume from the main chamber of the additional tank (34), with a concentration of 2.4%, is pumped back to the storage tank (33).

There are, therefore, two connections between the storage and additional tanks (33, 34), flowing in opposite directions. Flow meters are present in the connections between tanks to know the total filtered volume.

**Enrichment of fertilizing solution:**

In this third preferred mode of embodiment of the invention, the method includes a stage of adding nutrients (38) to the obtained quantity of sterile fertilizer, which in this case are formed by phosphorus and potassium. This stage of nutrient addition (38) is carried out in the additional tank (34), after the complementary stage, when the total volume and the concentration of solids are known. At this moment, the necessary amounts of nutrients can be properly dosed to achieve the desired concentration.

This phase is carried out automatically in the additional tank (34), according to its programming and the volumes and parameters of nitrogenated water it stores inside. In other preferred modes of embodiment, this stage of nutrient addition (38) takes place at the biogas plant (24) and is subsequently transferred to the additional tank (34).

**Operation procedure:**

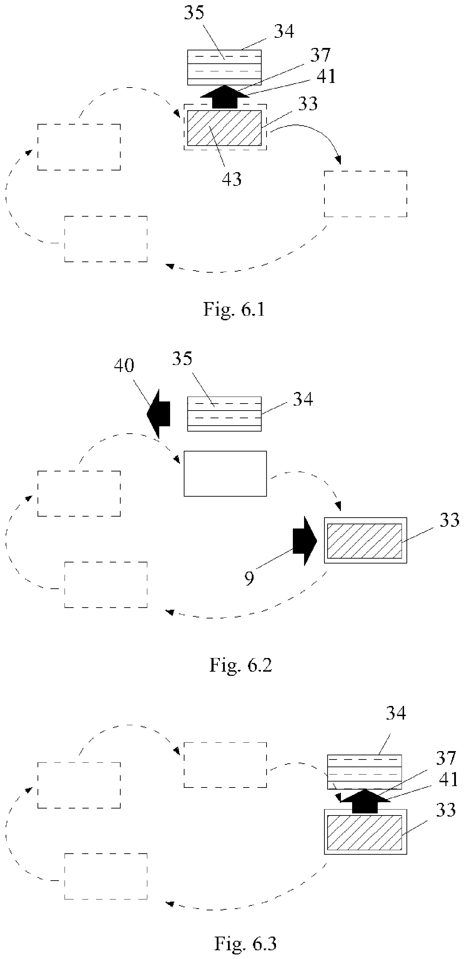

As can be schematically seen in 6.1 to 6.3, the additional tank spends the entire nighttime schedule, approximately from 19:00h to 8:00h the next day, next to the storage tank (33) in the same location, as shown in Figure 6.1.

Early in the morning, the storage tank (33) is disconnected and taken to the next collection point, as shown in Figure 6.2, leaving the additional tank (34) in the previous position, from 8:00h to 19:00h, so that farmers and agriculturists can consume (40) (upon identification in the system and account charge, if available) the liquid, sterilized fertilizer they require throughout the day.

Finally, at the end of the day, as can be seen in Figure 6.3, the additional tank (34) is transported along with the storage tank (33) again and connected to it so that the concentration process can be carried out again at night, from 19:00h to 8:00h, when the cycle starts anew.

In this third preferred mode of embodiment of the invention, the improved process also includes two or more collection points distributed in a first action zone.

Thus, the storage tank (33) has an itinerant position among these collection points according to a route of locations for the same, where after the change in position of the storage tank (33) the discharge (9) of the manure (36) is carried out by the farmers from the farms closest to this new location. Meanwhile, the additional tank (34) remains in the previous position of the same until the end of the day, for its transfer to the new position of the storage tank (33) for its connection to the same during the nighttime hours.

As shown in Figure 4, in the third preferred mode of embodiment of the invention, after the concentration (39) of the organic matter in the storage tank (33), the method includes a consumption stage (40) of the sterile liquid fertilizer by at least one farmer, prior identification of the same and corresponding payment (46), which includes the withdrawal of a part of the volume contained in the additional tank (34) during daylight hours.

On the other hand, the transport phase (1) of the manure (36) to the biogas plant (24), includes a stage of moving a tanker truck (14) to the storage tank (33) for the anaerobic emptying of its content, when its filling volume reaches a predetermined value or when a maximum time interval has elapsed since the first discharge occurred in that storage tank (33) and a transfer (15) of the withdrawn volume of manure (36) and/or whey with the tanker truck or vehicle (14) to a predetermined location, be it a biogas plant (24) or a CIT.

In this way, the third preferred mode of embodiment of the invention can be combined with the first or second modes of embodiment when treating manure, as the difference between these two lies in the transport phase (1) while the third mode of embodiment acts on the prior phase (2) (which positively conditions the transport phase (1)).

**Addition of whey to manure: Joint treatment of manure and whey**

Legally, whey and manure are considered Animal By-Products Not Intended for Human Consumption. From an administrative standpoint, they are considered waste and as such are subject to compliance with specific regulations for their transport and treatment.

As a general rule, the collection and transport of both wastes to the biogas plant must be carried out separately, to ensure their traceability.

In the specific treatment process described in this invention, it is important to note that the farmers who transport to the storage tank for discharge, do so after obtaining an appointment (4) authorizing said transfer and therefore the origin and destination of the waste are known, and thus this traceability is maintained.

This invention, both in terms of the storage tank (33) and the treatment process, considers the management of both wastes separately until their treatment at the biogas plant. As already mentioned, they are different wastes from a physicochemical point of view, but the solution proposed in this invention is equally valid for either.

However, in a particular mode of embodiment shown in Figure 4, a possible mixture of manure (36) and whey (42) in the storage tank (33) is considered.

This hypothetical mixture of whey and manure in the storage tank (33) would also be acceptable as it is possible to identify individual mixes at admission and thus guarantee traceability, public and animal health and avoid cross-contamination.

Figure 4 shows an alternative mode of embodiment that includes a phase of adding whey (42) concurrent to that of manure (36).

When this addition is concurrent, whey from cheese factories is added and mixed in the storage tank (33) of manure (36), after the discharge (9) in said storage tank (33), of the remaining portion of the volume of manure. The treatment of this whey and its mixtures is similar to that of manure (36).

1. Manure (36) and whey can be mixed directly in the storage tank (33), without needing to coordinate or control the timing between discharges of one and the other product. Nor is a minimum volume or a specific proportion between both products necessary. The quantities of manure (36) or whey are simply added on demand, and the storage tank (33) identifies the user and in the authorization process, this user defines what type of material (whey or manure) they will discharge. The tanker truck (14), after discharging the raw material in the storage tank (33), "knows" the composition of the mixture it carries and at the time of transfer to the biogas plant (24) or to the Intermediate Treatment Center (25) the reception and composition of it is recorded. After reception, the plant adjusts the amount of co-substrate based on the content of the mixture it receives.

2. On the other hand, it is important to note that there is no interference between the process of adding whey and the removal of excess nitrogenated water to the additional tank (34). The filtering process (41) is performed on the mixture of whey and manure (36). The tank "knows" the solid content when making the discharge and adjusts the filtering based on this value.

3. In the third preferred mode of embodiment of the invention, the additional stage of quality optimization (12) of the manure (36) contained in the storage tank (33), by adding reagents and enzymes takes place after the discharge of all users of the day (whether they discharge whey or manure), and preferably after the filtering process (41) has concluded, to not increase the material content in the storage tank (33).

It has been verified that the addition of this whey significantly improves the quality of the manure (36) as a raw material. Manure gasifies much better with a mixture of whey, which has a high organic content. Additionally, as the system allows recording the quantities and parameters when loading, whether it be manure or whey, the mixture can be known and if necessary, the process at the biogas plant (24) can be adjusted.

**Equipment Sterilization**

Both in the first mode of embodiment and in the second, the sterilization of equipment in contact with the farmers' tanks is contemplated, using UV radiation or ozone.

The goal, although the possibility is remote, is to minimize the risk of spreading diseases transmissible through feces among the livestock farms and cheese factories using the system's equipment.

The sterilization of these equipment is carried out automatically through devices installed in the container, once the user concludes the operation of the system.

The embodiments described constitute only examples of the present invention, therefore, the specific details, terms, and phrases used in this description should not be considered as limiting, but should be understood only as a basis for the claims and as a representative basis providing a comprehensible description, as well as sufficient information for the expert in the field to implement the present invention.

**Claims**

1. Airtight storage tank (33) for the storage of manure (36) or whey for treatment processes, comprising:

   • At least one pressure control valve;
   • Thermal regulation means consisting of thermal insulation and/or devices for heat or cold supply;
   • At least one load weighing control cell;
   • A transfer pump system, with a hose that connects to the transport means storage used by the farmer;
   • At least one hose with an adapter;
   • A plurality of rapid sensors for physical, chemical, and/or biological analysis;
   • At least one dispenser for chemical and biological regulators;
   • At least one mixer to homogenize the manure or whey and ensure the dispersion of the dosed chemicals;
   • A sampling system during loading;
   • One or more replaceable batteries, solar panels, and an auxiliary motor, to provide autonomous energy to the storage tank (33);
   • A rapid emptying system;
   • At least one touch interface module with card and QR identification, from where the system is operated with a mobile device;
   • A display screen for information;
   • At least one IP camera;
   • Central control system and communication 4G or higher, connecting the storage tank (33) with a central server.

2. Tank, according to claim 1, where the plurality of rapid sensors for physical, chemical, and/or biological analysis are one or several of the following: sensors for rapid analysis of pH, conductivity, hardness, COD, temperature, suspended solids (estimated from density), nitrogen (total, nitrates, ammonia, and organic), phosphorus, sulfates, potassium, copper, and zinc.

3. Improved process for anaerobic treatment of manure or whey in biogas plants (24), for manure (36) generated on livestock farms or whey produced in dairies, **characterized in that** it comprises:

a. a preliminary phase (2) of collection, transfer, control, treatment, and storage of manure (36) or whey, which includes the following stages performed by a farmer user or automatically:

• Searching or locating by the farmer using an electronic device, the location (3) of at least one initial collection point of manure (36) or whey, where a airtight and mobile storage tank (33) is temporarily located;
• Obtaining an appointment (4) or confirmation of a pre-scheduled appointment via an electronic device to perform a discharge of manure (36) or whey at the first collection point located in the previous stage;
• Transport (5) of a volume of manure (36) or whey, performed by the farmer, to the first collection point at the place and time set in the appointment from the previous stage;
• Registration and identification (6) of the farmer user, using a telematic system, at the first collection point;
• a connection of the transport means of the manure (36) or whey to the first collection point and discharge of a determined first portion (7) of the volume of manure (36) or whey into the storage tank (33) under anaerobic conditions, during a first time interval;
• automated sampling and analysis (8) of the chemical, physical, and/or biological characteristics of the first portion of the discharged manure volume, such that when these values do not meet (8.2) quality limits the discharge (13) is denied and when they are included (8.1) within predetermined quality ranges, the following process stages are carried out;
• preservation of the sample of manure (36) or whey from each discharge for collection by the operator and subsequent reference and analysis in a specialized laboratory;
• a discharge (9) of the remaining portion of the volume of manure (36) or whey transported to the first collection point under anaerobic conditions, and;
• automated communication (11) of the storage tank (33) with a central server, notifying the quantitative and qualitative data of the discharge in real-time;

b. a transport phase (1) under controlled anaerobic conditions of the manure (36) or whey, following the preliminary phase (2), which in turn includes the following stages executed by an operator:

• anaerobic discharge of the content of the storage tank (33) into a tanker vehicle (14) moved to it, when the filling volume of the tank reaches a predetermined value or when a predetermined maximum time interval has elapsed since the first discharge in it;
• transfer (15) of the volume of manure (36) or whey removed with the tanker vehicle (14) to a predetermined location.

4. Process, according to claim 3, including a further stage in the preliminary phase (2), after the discharge (9) of the volume of manure (36) in the storage tank (33), of concentration (39) of the organic matter in it, through the filtration (41) and sterilization (37) of excess nitrogenated water, which is transferred to an additional tank (34), which is arranged next to the storage tank (33) at least during the nighttime hours and is connected to it, thus concentrating the manure in the storage tank (33) and accumulating a sterile liquid fertilizer in the additional tank (34).

5. Process, according to any of claims 3 or 4, wherein the discharge of the content of the storage tank (33) into a tanker vehicle (14) is carried out after a predetermined maximum time interval of 24h - 48h, preferably less than 24h, from the first discharge in the storage tank (33).

6. Process, according to any of claims 3 to 5, including a further stage of quality optimization (12) of the manure (36) or whey contained in the storage tank (33), after the discharge of the remaining volume portion (9) in it, where the storage tank (33) comprises dispensers of reagents and enzymes, and mixers of the same in the volume of manure (36), to carry out said quality optimization.

7. Process, according to any of claims 3 to 6, wherein the transfer stage (15) of the volume of manure (36) or whey contained in a storage tank (33) by a tanker vehicle (14), takes place from one or more first collection points to the biogas plant (24).

8. Process, according to claim 7, wherein the tanker vehicle (14) is connected anaerobically to the mixing module of the biogas plant (24), and the manure or whey and the biogas generated in the storage tank (33) are transferred to the biogas plant (24) by dumping and injection respectively, recording the time of dumping associated with the parameters of the delivered manure.

9. Process, according to any of claims 3 to 8, wherein the transfer stage (15) of the volume of manure (36) or whey contained in a storage tank (33) by a tanker vehicle (14), takes place from one or more first collection points to an Intermediate Treatment Center (25) that includes at least one airtight reception tank (26) that guarantees the maintenance of anaerobic conditions.

10. Process, according to claim 9 including the additional stages of:

   • Discharge (18) of tanker trucks (14) in the reception tank (26);
   • Sampling and analysis (19) of the chemical, physical, and/or biological characteristics of the discharged volume of manure (36) and/or whey;
   • Derivation (20) of the volume of manure (36) or whey from the reception tank (26) to a airtight process tank (27), for physical, chemical, and biological pretreatment of the manure (36) or whey, when the values obtained in sampling and analysis (19) are included (19.1) within predetermined homogeneity and/or quality limits; alternatively, when the values obtained from sampling and analysis do not meet (19.2) quality limits, the process ends at this stage by a derivation (23) of the volume of manure (36) or whey from the reception tank (26) to a waste tank (30) for the removal of the same or transfer to a wastewater treatment plant (29);
   • A first transfer (21) of the volume stored in the process tank (27) to a airtight dispatch tank (28); and,
   • A second transfer (22) from the Intermediate Treatment Center (25) to the biogas plant (24) by tanker vehicles (14).

11. Process, according to any of claims 9 or 10, wherein the tanks (26, 27, 28, 30) of the Intermediate Treatment Center (25) comprise measurement and control means of the variables relevant for the anaerobic digestion of the manure (36) or whey, including pressure, weight, and volume of the manure load (36) and several of the following physical-chemical parameters: pH, conductivity, hardness, COD, temperature, suspended solids (fixed and volatile), nitrogen, phosphorus, sulfates, potassium, copper, and zinc.

12. Process, according to any of claims 9 to 11, wherein the pretreatment of the manure (36) or whey includes one or several of the following actions:

   • Dosage of chemical pH regulators.
   • Dosage of nutrients and/or minerals necessary for the metabolism of the different families of bacteria involved in the anaerobic digestion process.
   • Mixing with plant waste to regulate the Carbon/Nitrogen ratio.
   • Dilution with water to reduce the concentration of toxic elements or inhibitors of bacterial metabolism.
   • Thermal regulation to optimize the anaerobic digestion process.
   • Adjustment of the granularity and viscosity of the manure or whey to allow its pumping by employing dilution or concentration units.

13. Process, according to any of claims 9 to 12, wherein the airtight tanks (26, 27, 28, 30) of the Intermediate Treatment Center (25) comprise internet connection means with a central server and, monitoring and periodic control means of the data collected in them.

14. Process, according to any of claims 9 to 13, comprising two or more Intermediate Treatment Centers (25).

15. Process, according to any of claims 9 to 14, wherein the airtight tanks (26, 27, 28, 30) of the Intermediate Treatment Center (25) are located in a confined manner (underground or containerized) and interconnected among themselves.

16. Process, according to any of claims 9 to 15, wherein the process tank (27) is connected with a wastewater treatment plant (29) or with a residual water tank.

17. Process, according to claim 16, wherein the process includes a stage of incorporating sludge from an urban wastewater treatment plant (29) into the process tank (27), mixing it with the manure (36) before its transfer to the biogas plant (24).

18. Process, according to any of claims 3 to 17, wherein the central server comprises integrated artificial intelligence algorithms, for the optimization of the functioning of the different stages of the process.

19. Process, according to any of claims 3 to 18, wherein the concentration and transfer of excess nitrogenated water is carried out by pumping or $CO_2$ injection under pressure in the storage tank (33) and connecting it to the additional tank (34) through a membrane/filter.

20. Process according to any of claims 3 to 19, wherein the improved process includes two or more collection points distributed in a first action zone, and the storage tank (33) has an itinerant position among these collection points according to a route of locations for them, where after the change in position of the storage tank (33), the additional tank remains in the previous position of the same until the end of the day, for its transfer to the new position of the storage tank (33) for its connection to it during the nighttime hours.

21. Process according to any of claims 4 to 20, comprising a further stage of consumption (40) of sterile liquid fertilizer by at least one farmer, following identification of the same and corresponding payment (46), which includes the withdrawal of a part of the volume contained in the additional tank (34) during daytime hours.

22. Process, according to any of claims 4 to 21, comprising a stage of adding nutrients (38) in the amount obtained from sterile fertilizer.

23. Process, according to claim 22, wherein the nutrient addition stage (38) is carried out in the additional tank (34), after the complementary stage.

24. Process, according to claim 22, wherein the nutrient addition stage (38) is carried out at the biogas plant (24) and is subsequently transferred to the additional tank (34).

25. Process, according to any of claims 23 to 24, wherein the nutrients are formed by phosphorus and/or potassium

26. Process, according to any of claims 3 to 25, comprising a stage of sterilization of the equipment at the end of the operation of the equipment

27. Process according to any of claims 4 to 26, comprising a stage of adding whey (42) concurrently with the discharge of manure (36) in the storage tank (33) of manure (36), after the discharge (9) in said storage tank (33), of the remaining portion of the volume of manure.

Fig. 1

Fig. 2

Fig. 3

Fig. 4

Fig. 5

EP 4 509 469 A1

Fig. 6.1

Fig. 6.2

Fig. 6.3

**EP 4 509 469 A1**

<table>
<tr><td align="center">INTERNATIONAL SEARCH REPORT</td><td>International application No.<br>PCT/ES2023/070223</td></tr>
</table>

**A. CLASSIFICATION OF SUBJECT MATTER**

See extra sheet

According to International Patent Classification (IPC) or to both national classification and IPC

**B. FIELDS SEARCHED**

Minimum documentation searched (classification system followed by classification symbols)
C02F, B65D

Documentation searched other than minimum documentation to the extent that such documents are included in the fields searched

Electronic data base consulted during the international search (name of data base and, where practicable, search terms used)

EPODOC, INVENES, SEARCH TOOL (EPO), ESPACENET, INTERNET, NPL, WPIAP, WPI

**C. DOCUMENTS CONSIDERED TO BE RELEVANT**

| Category* | Citation of document, with indication, where appropriate, of the relevant passages | Relevant to claim No. |
|---|---|---|
| A | EP 1847791 A1 (BEARN INNOVATION BEARN INNOVATION ET AL.) 24/10/2007,<br>claim, figures and abstract | 1-27 |
| A | US 2011318778 A1 (PETERSEN GERT BJOERN ET AL.) 29/12/2011,<br>Abstract, figures and claims, | 1-27 |

☐ Further documents are listed in the continuation of Box C.   ☒ See patent family annex.

| | |
|---|---|
| *   Special categories of cited documents:<br>"A"  document defining the general state of the art which is not considered to be of particular relevance.<br>"E"  earlier document but published on or after the international filing date<br>"L"  document which may throw doubts on priority claim(s) or which is cited to establish the publication date of another citation or other special reason (as specified)<br>"O"  document referring to an oral disclosure use, exhibition, or other means.<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other documents , such combination being obvious to a person skilled in the art<br>"&"  document member of the same patent family |

| Date of the actual completion of the international search<br>18/07/2023 | Date of mailing of the international search report<br>**(19/07/2023)** |
|---|---|
| Name and mailing address of the ISA/<br><br>OFICINA ESPAÑOLA DE PATENTES Y MARCAS<br>Paseo de la Castellana, 75 - 28071 Madrid (España)<br>Facsimile No.: 91 349 53 04 | Authorized officer<br>I. Abad Gurumeta<br><br><br>Telephone No. 913495337 |

Form PCT/ISA/210 (second sheet) (July 2022)

24

**INTERNATIONAL SEARCH REPORT**

International application No.

PCT/ES2023/070223

CLASSIFICATION OF SUBJECT MATTER

*C02F3/28* (2023.01)
*C02F1/66* (2023.01)
*C02F1/68* (2023.01)
*C02F11/14* (2019.01)
*B65D90/503* (2019.01)
*C02F103/20* (2006.01)

Form PCT/ISA/210 (extra sheet) (July 2022)

**EP 4 509 469 A1**

| Patent document cited in the search report | Publication date | Patent family member(s) | Publication date |
|---|---|---|---|
| US2011318778 A1 | 29.12.2011 | CA2804013 A1 | 12.01.2012 |
| | | WO2012005833 A1 | 12.01.2012 |
| EP1847791 A1 | 24.10.2007 | PL1847791T T3 | 30.03.2012 |
| | | UA94747 C2 | 10.06.2011 |
| | | JP2009534623 A | 24.09.2009 |
| | | JP4875146B B2 | 15.02.2012 |
| | | DK1847791T T3 | 09.01.2012 |
| | | ES2372313T T3 | 18.01.2012 |
| | | NZ572340 A | 29.07.2011 |
| | | PT1847791E E | 28.11.2011 |
| | | AT523746T T | 15.09.2011 |
| | | MA30417 B1 | 04.05.2009 |
| | | RU2008142146 A | 27.05.2010 |
| | | RU2419049 C2 | 20.05.2011 |
| | | MX2008013504 A | 23.02.2009 |
| | | ZA200809360 B | 29.07.2009 |
| | | US2009229140 A1 | 17.09.2009 |
| | | CN101454630 A | 10.06.2009 |
| | | CN101454630B B | 26.12.2012 |
| | | KR20090007458 A | 16.01.2009 |
| | | KR101394623B B1 | 13.05.2014 |
| | | NO20084754L L | 12.12.2008 |
| | | CA2650025 A1 | 01.11.2007 |
| | | CA2650025 C | 23.06.2015 |
| | | AU2007242682 A1 | 01.11.2007 |
| | | AU2007242682B B2 | 22.12.2011 |
| | | WO2007122328 A1 | 01.11.2007 |
| | | WO2007122328 A8 | 18.12.2008 |
| | | FR2900224 A1 | 26.10.2007 |
| | | FR2900224 B1 | 04.07.2008 |

Form PCT/ISA/210 (patent family annex) (July 2022)

26